# EUROPÄISCHE PATENTSCHRIFT

(11) **EP 1 760 352 B1**
(45) Veröffentlichungstag und Bekanntmachung des Hinweises auf die Patenterteilung: **16.04.2008**
(21) Anmeldenummer: 05018714.5
(22) Anmeldetag: 29.08.2005
(51) Int. Cl.: F16D 65/14, F16D 66/00, F16D 55/227, F16D 65/38, F16D 55/2265

(54) **Selbstverstärkende elektromechanische Schwimmsattel-Teilbelagscheibenbremse mit verbesserter Sattelführung**
Self-amplifying electromechanic floating caliper disc brake with improved caliper guide
Frein à disque électromécanique autoserrant à étrier coulissant avec guidage d'étrier amélioré

(43) Veröffentlichungstag der Anmeldung: 07.03.2007
(73) Patentinhaber: VDO Automotive AG, 93055 Regensburg (DE)
(72) Erfinder: Schautt, Martin, 80634 München (DE)

(56) Entgegenhaltungen:
- WO-A-20/05015046
- WO-A-20/05028905
- US-A- 4 391 355

## Beschreibung

Die vorliegende Erfindung betrifft selbstverstärkende elektromechanische Schwimmsattel-Teilbelagscheibenbremsen, insbesondere für Kraftfahrzeuge. Schwimmsattel-Teilbelagscheibenbremsen der genannten Art sind bekannt, beispielsweise aus der DE 101 51 950 A1 oder der WO 2005/015046 A1.

Selbstverstärkende elektromechanische Schwimmsattel-Teilbelagscheibenbremsen weisen eine um eine Achse drehbare Bremsscheibe, einen fahrzeugfesten Bremsträger und einen die Bremsscheibe übergreifenden Schwimmsattel auf, der parallel zur Drehachse der Bremsscheibe verschieblich am Bremsträger befestigt ist. Ein elektrischer Aktuator stellt bei einer Betätigung der Bremse eine Betätigungskraft bereit, die unter Zwischenschaltung einer Selbstverstärkungsreinrichtung auf einen Reibbelag übertragen wird, um diesen so genannten direkt betätigten Reibbelag an eine Seite der Bremsscheibe anzupressen. Aufgrund der bei einem Kontakt des direkt betätigten Reibbelags mit der Bremsscheibe entstehenden Reaktionskräfte wird mittels des Schwimmsattels auch ein auf der entgegensetzten Seite der Bremsscheibe angeordneter, so genannter indirekt betätigter Reibbelag an die Bremsscheibe angepresst. Zum Ausgleich von Reibbelagverschleiß ist ferner eine Nachstelleinrichtung vorhanden.

Um eine solche selbstverstärkende elektromechanische Schwimmsattel-Teilbelagscheibenbremse im Betrieb zuverlässig regeln zu können, muss die aktuell wirkende Reibkraft ermittelt werden. Der Erfindung liegt die Aufgabe zugrunde, eine Scheibenbremse der eingangs näher beschriebenen Art so auszubilden, dass eine genaue Ermittlung der im Bremsbetrieb wirkenden Reibkraft bzw. des im Bremsbetrieb wirkenden Reibmoments mit möglichst geringem konstruktivem Aufwand möglich ist.

Diese Aufgabe ist erfindungsgemäß mit einer selbstverstärkenden elektromechanischen Schwimmsattel-Teilbelagscheibenbremse gelöst, die die im Patentanspruch 1 angegebenen Merkmale aufweist. Im Unterschied zu herkömmlichen Schwimmsattel-Teilbelagscheibenbremsen, bei denen der Schwimmsattel üblicherweise mittels zweier Führungen verschieblich am Bremsträger befestigt ist, gibt es bei der erfindungsgemäßen Scheibenbremse lediglich eine erste Führung, mittels derer der Schwimmsattel parallel zur Drehachse der Bremsscheibe verschiebbar am Bremsträger befestigt ist. Eine zweite Führung lagert erfindungsgemäß eine Betätigungseinheit, der der elektrische Aktuator, die Selbstverstärkungseinrichtung und die Nachstelleinrichtung zugehörig sind, in parallel zur Drehachse der Bremsscheibe verschiebbarer Weise am Bremsträger. Eine dritte Führung schließlich befestigt die Betätigungseinheit am Schwimmsattel derart, dass die Betätigungseinheit am Schwimmsattel um eine zur Drehachse der Bremsscheibe parallele Achse verschiebbar und um diese Achse drehbar gelagert ist. Vorzugsweise ist bzw. sind die erste Führung und/oder die zweite Führung und/oder die dritte Führung als Gleitbolzen ausgebildet. Aufgrund der erfindungsgemäß vorgesehenen drei Führungen ergibt sich eine statisch nicht überbestimmte Gesamtanordnung der funktionell zusammenwirkenden Hauptkomponenten der Bremse und somit eine hervorragende Voraussetzung zur konstruktiv einfachen Erfassung der im Betrieb der Bremse aktuell wirkenden Reibkraft.

Bei der erfindungsgemäßen Bremse ist die erste Führung, d.h. die Führung zwischen Schwimmsattel und Bremsträger, so gestaltet, dass vier Freiheitsgrade festgelegt sind. Nicht festgelegt sind die Verschiebung in x-Richtung, d.h. parallel zur Drehachse der Bremsscheibe, und die Drehung um die durch die erste Führung gebildete Achse in x-Richtung. Bei der zweiten Führung, d.h. der Führung zwischen der Betätigungseinheit und dem Bremsträger, sind ebenfalls vier Freiheitsgrade festgelegt. Nicht festgelegt sind wiederum die Verschiebung in x-Richtung und die Drehung um die Achse, entlang derer eine Verschiebung in x-Richtung erfolgen kann. Bei der dritten Führung, d.h. der Führung zwischen Betätigungseinheit und Schwimmsattel, sind zwei Freiheitsgrade festgelegt, nicht festgelegt sind hingegen alle Drehungen und eine Verschiebung in x-Richtung. Bei der dritten Führung handelt es sich demnach um ein Gelenk.

Gemäß einer bevorzugten Ausführungsform der erfindungsgemäßen Scheibenbremse misst ein Sensor zur Ermittlung der im Betrieb der Bremse wirkenden Reibkraft die an der dritten Führung zwischen der Betätigungseinheit und dem Schwimmsattel wirkende Abstützkraft. Die dritte Führung ist aus mehreren Gründen für eine solche Messung gut geeignet. Zum einen wird aufgrund der beschriebenen Gestaltung der dritten Führung nur eine Kraft und kein Moment gemessen, wodurch die Messung unabhängig von einem Verschleiß des Reibbelages ist. Zum anderen herrschen im Bereich der dritten Führung aufgrund des relativ großen Abstands zu den Reibbelägen moderate Temperaturen. Schließlich ist die Distanz zwischen der dritten Führung und der Betätigungseinheit kurz, sodass die elektrische Verbindung des Sensors mit der Betätigungseinheit problemlos möglich ist.

Vorzugsweise ist in Bezug auf die Drehachse der Bremsscheibe die zweite Führung radial einwärts bezüglich der ersten Führung angeordnet, d.h. die zweite Führung befindet sich näher an der Drehachse der Bremsscheibe als die erste Führung. Dabei kann die zweite Führung bezüglich der Drehachse der Bremsscheibe radial einwärts der Betätigungseinheit angeordnet sein, d.h. die zweite Führung befindet sich näher an der Drehachse der Bremsscheibe als die Betätigungseinheit. Grundsätzlich kann die zweite Führung so angeordnet sein, dass in der Einbaulage der Bremse im Fahrzeug der Schwerpunkt der Betätigungseinheit genau oberhalb der zweiten Führung liegt und damit in der Regel in Richtung der größten im Fahrbetrieb auftretenden Beschleunigung. Auf diese Weise werden Störeinflüsse minimiert, welche aus Trägheitskräften resultieren, zu denen es beim Überfahren einer Unebenheit oder Ähnlichem kommt.

Bei allen Ausführungsformen der erfindungsgemäßen Scheibenbremse ist die Selbstverstärkungseinrichtung vorzugsweise zwischen dem direkt betätigten Reibbelag und dem elektrischen Aktuator angeordnet. Auf diese Weise ergibt sich ein kurzer und kompakter Kraftfluss.

Bei einer bevorzugten Ausführungsform der erfindungsgemäßen Scheibenbremse, bei der die Betätigungseinheit sich bei einem Bremsvorgang auf ihrer von der Bremsscheibe abgewandten Seite in einer zur Drehachse der Bremsscheibe parallelen Richtung an einer Kontaktfläche zum Schwimmsattel abstützt, ist diese Kontaktfläche in Abstützrichtung zumindest im Wesentlichen form- und lagestabil und quer zur Abstützrichtung reibungsarm ausgebildet. Auf diese Weise wird das Ergebnis der Reibkraftmessung möglichst wenig verfälscht, denn die hohe Steifigkeit der Kontaktfläche in Abstützrichtung sorgt für eine quasi verlustfreie Übertragung der Zuspannkraft, wohingegen die reibungsarme Ausbildung quer zur Abstützrichtung verhindert, dass Kraftkomponenten an der Reibkraftmessstelle vorbei und damit unerfasst in den Schwimmsattel eingeleitet werden. Zur reibungsarmen Ausbildung der Kontaktfläche zwischen der Betätigungseinheit und dem Schwimmsattel kann diese Kontaktfläche als Gleitpaarung ausgebildet sein, z.B. mittels einer PTFE-Beschichtung, einer Bronze/Stahl-Materialpaarung etc. Alternativ kann an der Kontaktfläche quer zur Abstützrichtung Rollreibung vorliegen, z.B. durch Übertragen der Abstützkraft mittels Kugeln oder Walzen, die quer zur Abstützrichtung keine Kraft übertragen können. Auch möglich wäre eine Kraftübertragung mittels einer oder mehrerer biegeweicher dünner Pfosten.

Ein Ausführungsbeispiel der erfindungsgemäßen Scheibenbremse wird im Folgenden anhand der beigefügten, schematischen Zeichnungen näher erläutert, in denen:
- Figur 1: eine räumliche Darstellung einer erfindungsgemäßen selbstverstärkenden elektromechanischen Schwimmsattel-Teilbelagscheibenbremse von der Seite zeigt,
- Figur 2: die Scheibenbremse aus Figur 1 in räumlicher Darstellung von schräg vorne zeigt,
- Figur 3: in aufgebrochener und vergrößerter Darstellung die wesentlichen Elemente der Scheibenbremse aus Figur 1 zeigt,
- Figur 4: eine seitliche Draufsicht auf den Hauptteil der Scheibenbremse aus Figur 1 zeigt,
- Figur 5: den Schnitt J-J aus Figur 4 zeigt,
- Figur 6: den Schnitt H-H aus Figur 4 zeigt,
- Figur 7: den Schnitt P-P aus Figur 4 zeigt,

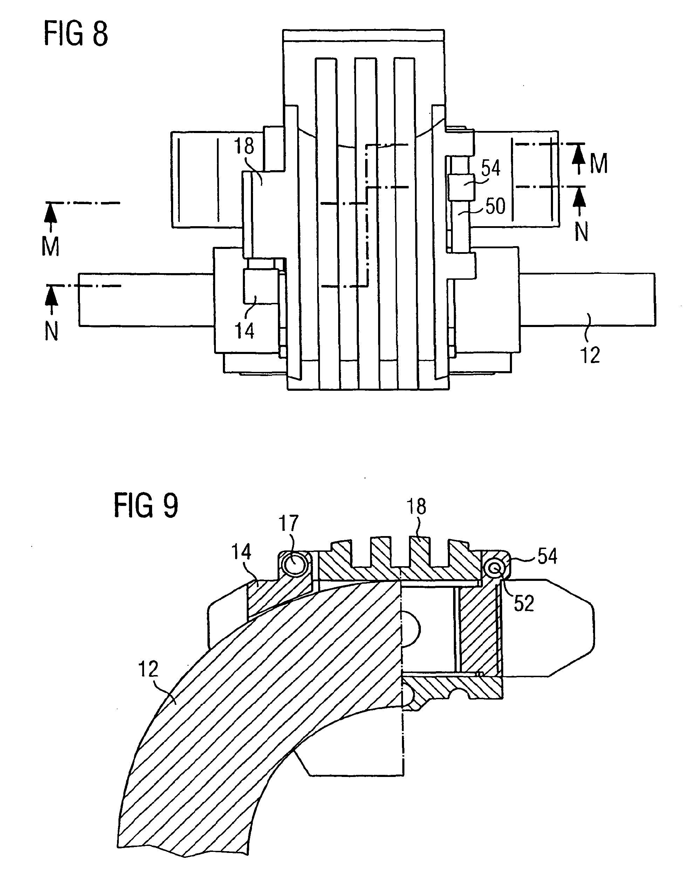

- Figur 8: eine Draufsicht auf die Scheibenbremse aus Figur 1 von oben zeigt,
- Figur 9: den Schnitt N-N aus Figur 8 zeigt, und

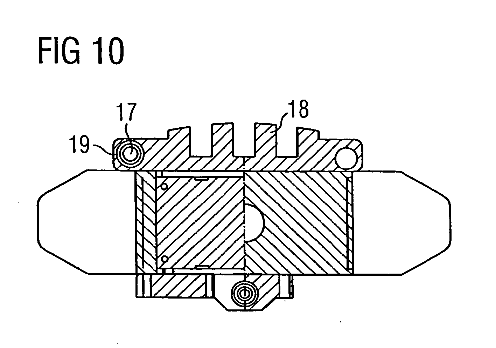

- Figur 10: den Schnitt M-M aus Figur 8 zeigt.

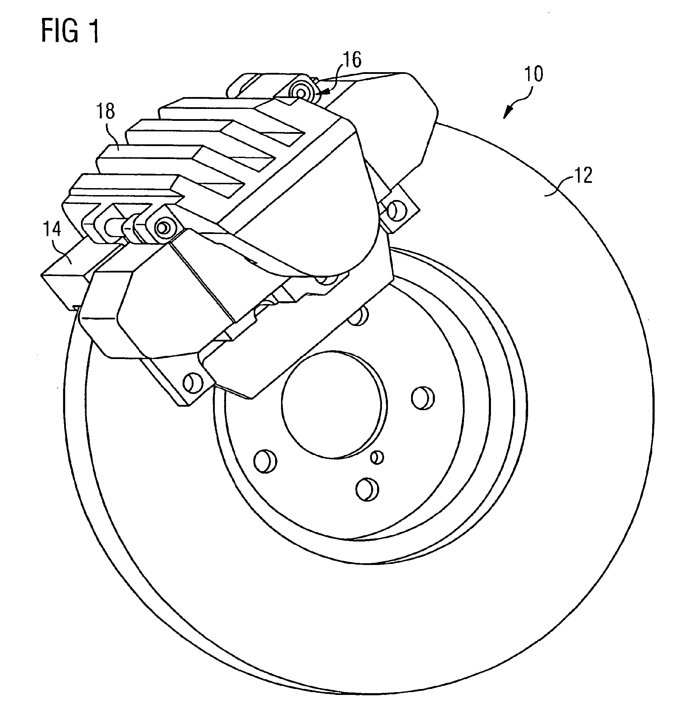

Figur 1 zeigt in räumlicher Darstellung schräg von der Seite eine allgemein mit 10 bezeichnete selbstverstärkende elektromechanische Schwimmsattel-Teilbelagscheibenbremse, wie sie z.B. in einem Kraftfahrzeug Verwendung finden kann.

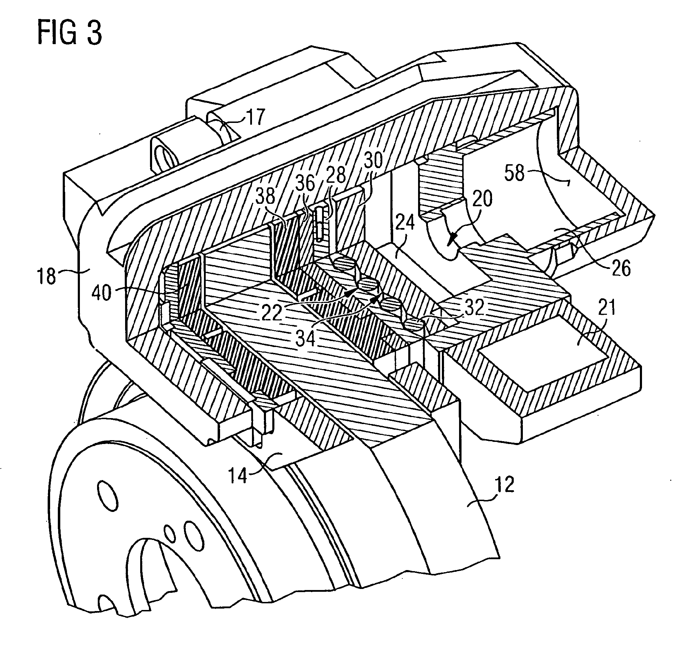

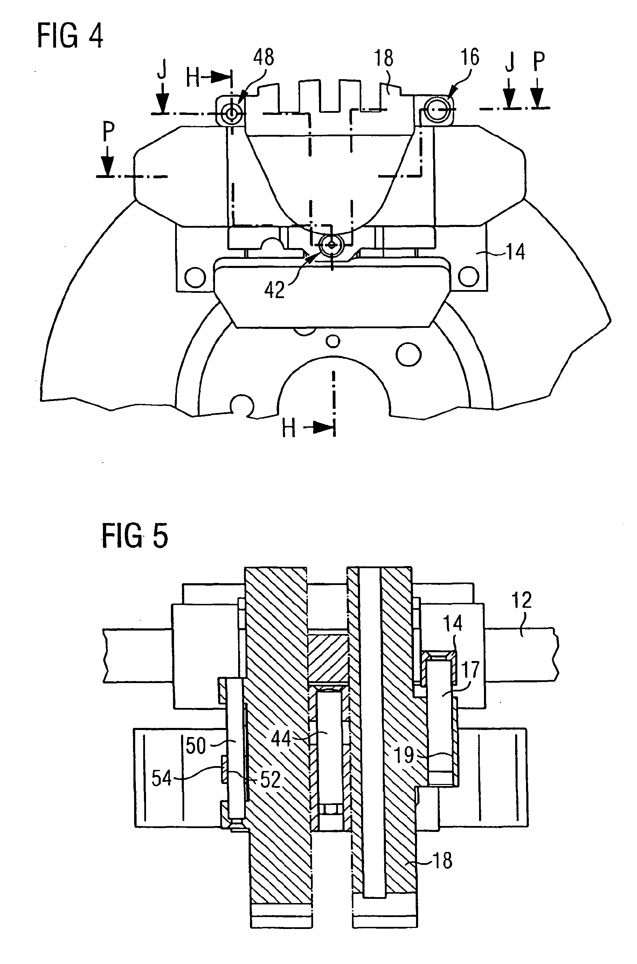

Die Scheibenbremse 10 hat eine um eine Achse x drehbare Bremsscheibe 12, die im Einbauzustand der Bremse 10 fest mit einem abzubremsenden Bauteil gekoppelt ist, beispielsweise mit einem Rad eines Fahrzeugs. Die restlichen Bauteile der Bremse 10 sind mittels eines Bremsträgers 14 ortsfest angebracht, beispielsweise an einer Radaufhängung eines Fahrzeugs. An dem Bremsträger 14 ist mittels einer ersten Führung 16 ein die Bremsscheibe 12 übergreifender Schwimmsattel 18 so befestigt, dass er in Bezug auf den Bremsträger 14 parallel zur Achse x hin und her verschiebbar ist. Wie insbesondere aus den Figuren 3 und 5 gut ersichtlich, besteht die erste Führung 16 aus einem am Bremsträger 14 befestigten Gleitbolzen 17, der mit einer im Schwimmsattel 18 ausgebildeten Bohrung 19 zusammenwirkt.

Wie besser aus Figur 3 ersichtlich, ist innerhalb des Schwimmsattels 18 eine Betätigungseinheit 20 untergebracht, zu der ein hier nur symbolisch dargestellter elektrischer Aktuator 21 zum Erzeugen einer Betätigungskraft, eine Selbstverstärkungseinrichtung 22 zur Selbstverstärkung der von dem elektrischen Aktuator 21 erzeugten Betätigungskraft und eine ebenfalls nicht dargestellte Nachstelleinrichtung zum Ausgleich von Reibbelagverschleiß gehören. Der elektrische Aktuator 21 überträgt seine Betätigungskraft über ein nicht gezeigtes Getriebe, das in einem Raum 24 angeordnet ist und beispielsweise als Spindelgetriebe ausgestaltet sein kann, auf eine der Selbstverstärkungseinrichtung 22 zugehörige Keilplatte 28, um letztere parallel zur Bremsscheibenebene translatorisch hin und her zu bewegen. Die nicht gezeigte Nachstelleinrichtung ist in einem Raum 26 der Betätigungseinheit 20 angeordnet.

Die Selbstverstärkungseinrichtung 22 umfasst ferner ein Widerlager 30 und zwischen der Keilplatte 28 und dem Widerlager 30 angeordnete Walzen 32, die in V-förmigen Vertiefungen 34 aufgenommen sind, die in einander zugewandten Flächen der Keilplatte 28 bzw. des Widerlagers 30 ausgebildet sind. Im in Fig. 3 wiedergegebenen Ausgangs- bzw. Ruhezustand der Scheibenbremse 10 liegen die Vertiefungen 34 sich jeweils paarweise gegenüber und nehmen zwischen sich eine Walze 32 auf. Die den Walzen 32 entgegengesetzte Seite der Keilplatte 28 steht in flächigem Kontakt mit einer Trägerplatte 36 eines direkt betätigten Reibbelags 38, der beispielsweise durch Verkleben fest mit der Trägerplatte 36 verbunden ist. Der Reibbelag 38 wird als "direkt betätigt" bezeichnet, weil der elektrische Aktuator ihm unter Zwischenschaltung der Selbstverstärkungseinrichtung 22 unmittelbar gegen die Bremsscheibe 12 drückt. Hingegen wird ein dem Reibbelag 38 gegenüber liegender und auf die andere Seite der Bremsscheibe 12 einwirkender Reibbelag 40 als indirekt betätigter Reibbelag bezeichnet, weil dieser Reibbelag erst im Anschluss an das in Kontakt kommen des direkt betätigten Reibbelags 36 mit der Bremsscheibe 12 durch eine sich aus Reaktionskräften ergebende Verschiebung des Schwimmsattels 18 in Anlage mit der Bremsscheibe 12 bewegt wird.

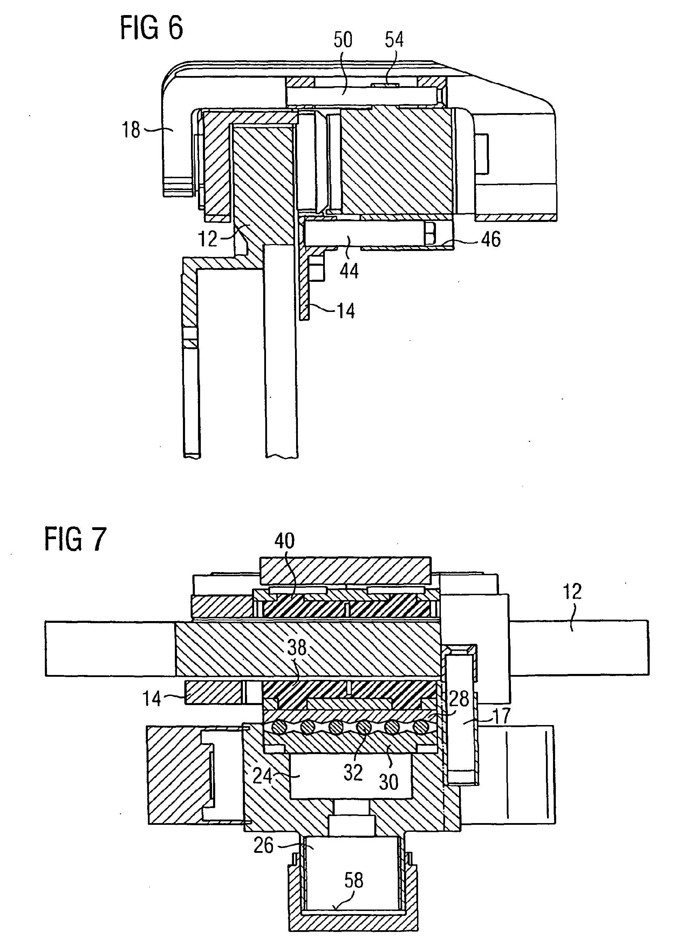

Die Betätigungseinheit 20 ist mittels einer zweiten Führung 42 am Bremsträger 14 so befestigt, dass sie bezüglich des Bremsträgers parallel zur Drehachse x hin und her verschiebbar ist. Wie insbesondere aus Figur 6 gut ersichtlich, besteht die zweite Führung 42 aus einem am Bremsträger 14 befestigten Gleitbolzen 44, der mit einer Bohrung 46 der Betätigungseinheit 20 zusammenwirkt. Im dargestellten Ausführungsbeispiel ist die zweite Führung 42 in Bezug auf die Lage der Drehachse x radial weiter innen angeordnet als die erste Führung 16. Zudem befindet sich die zweite Führung 42 radial innerhalb der Betätigungseinheit 20, im dargestellten Ausführungsbeispiel genau unterhalb des Schwerpunkts der Betätigungseinheit 20.

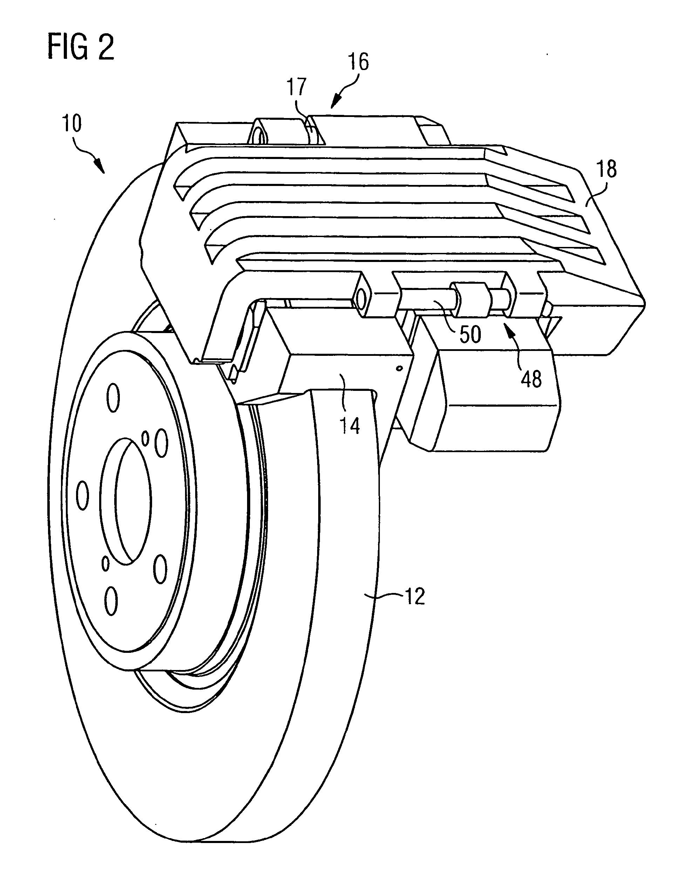

Die Betätigungseinheit 20 ist ferner, siehe insbesondere die Figuren 1, 2 und 4 bis 6, mittels einer dritten Führung 48 am Schwimmsattel 18 so befestigt, dass sie bezüglich des Schwimmsattels längs einer zur Drehachse x parallelen Achse hin und her verschiebbar sowie um diese Achse drehbar gelagert ist. Die dritte Führung 48 wird gebildet durch einen am Schwimmsattel 18 befestigten Gleitbolzen 50, der sich durch eine Bohrung 52 erstreckt, welche in einem Auge 54 der Betätigungseinheit 20 ausgebildet ist. Aufgrund einer kurzen Führungslänge der dritten Führung 48 in Verbindung mit einem Übermaß der Bohrung 52 ist eine ausreichende Drehung um die y-Achse und die z-Achse möglich, die gewährleistet, dass keine störenden Zwangskräfte um diese beiden Achsen aufgebaut werden können.

Mittels der drei Führungen 16, 42 und 48 sind der Schwimmsattel und die Betätigungseinheit 20 in statisch nicht überbestimmter Weise gelagert. Bei der ersten Führung 16 sind nicht festgelegt die Verschiebung in x-Richtung sowie eine Drehung um eine zur x-Achse parallele Achse, gleiches gilt auch für die zweite Führung 42. Bei der dritten Führung 48 sind nicht festgelegt alle Drehungen sowie die Verschiebung in x-Richtung. Die erfindungsgemäße Scheibenbremse 10 ist deshalb trotz einer spielarmen Führung unempfindlich gegenüber einem Verklemmen bei ansteigender Betriebstemperatur, ferner halten sich die Anforderungen an die Fertigungsgenauigkeit der einzelnen Teile im Rahmen.

Im Folgenden wird die Funktion der Scheibenbremse 10 näher erläutert. Soll die sich drehende Bremsscheibe 12 abgebremst werden, wird zunächst der elektrische Aktuator 21 der Betätigungseinheit 20 dazu veranlasst, mittels des von ihm angetriebenen Spindeltriebes, der sich im Raum 24 befindet, die Keilplatte 28 translatorisch parallel zur Bremsscheibe 12 zu verschieben (siehe Figur 3). Die V-förmigen Vertiefungen 34 der Keilplatte 28 laufen somit auf den Walzen 32 hoch und vergrößern dadurch den in x-Richtung bestehenden Abstand zwischen der Keilplatte 28 und dem Widerlager 30, wodurch der direkt betätigte Reibbelag 38 zur Bremsscheibe 12 hin bewegt wird und schließlich in Kontakt mit der Bremsscheibe 12 gerät. Sobald ein Reibkontakt zwischen dem direkt betätigten Reibbelag 38 und der Bremsscheibe 12 besteht, kommt es zu einer Reaktionskraft, die den Schwimmsattel 18 auf der ersten Führung 16 so verschiebt, dass auch der indirekt betätigte Reibbelag 40 in Kontakt mit der Bremsscheibe 12 kommt. Ferner wird der direkt betätigte Reibbelag 38 nach seinem in Kontakt kommen mit der sich drehenden Bremsscheibe 12 von letzterer tangential zur Drehrichtung der Bremsscheibe 12 mitgenommen, wodurch die V-förmigen Vertiefungen 34 der Keilplatte 28 noch weiter auf den Walzen 32 hoch laufen, was zu einer entsprechenden, erneuten Vergrößerung des Abstands zwischen der Keilplatte 28 und dem Widerlager 30 und damit zu einem verstärkten Anpressen des direkt betätigten Reibbelags 38 und, aufgrund der Koppelung über den Schwimmsattel 18, auch des indirekt betätigten Reibbelags 40 an die Bremsscheibe führt, ohne dass der elektrische Aktuator 21 der Betätigungseinheit 20 eine größere Betätigungskraft ausübt. Vielmehr beruht die verstärkte Anpresskraft auf der sich durch den zuvor beschriebenen Ablauf ergebenden selbstverstärkenden Wirkung der Selbstverstärkungseinrichtung 22.

Die Rückwirkkraft, die aus der zwischen dem direkt betätigten Reibbelag 38 und der sich drehenden Bremsscheibe 12 wirkenden Reibkraft resultiert, wird in die Betätigungseinheit 20 eingeleitet und kann deshalb zur Ermittlung der aktuell wirkenden Reibkraft herangezogen werden. Hierzu befindet sich im Bereich des zur dritten Führung 48 gehörenden Auges 54 ein nicht dargestellter Kraftsensor, der die von der Betätigungseinheit 20 auf den Schwimmsattel 18 jeweils übertragene Abstützkraft misst. Diese Abstützkraft ist ein direktes Maß für die aktuell an der Bremsscheibe 12 wirkende Reibkraft. Der gemessene Wert wird in einer nicht gezeigten Steuerung, mit der der Kraftsensor und der elektrische Aktuator 21 verbunden sind, mit einem vorgegebenen Wert verglichen, der aus einer z.B. vom Fahrer eines Kraftfahrzeuges gewünschten Bremsanforderung resultiert. Ist der gemessene Wert zu hoch, betätigt die Steuerung den elektrischen Aktuator 21 derart, dass letzterer die Keilplatte 28 in einer Richtung parallel zur Bremsscheibe 12 verschiebt, die zu einer Annäherung von Keilplatte 28 und Widerlager 30 führt, d.h. in einer Richtung, in der die Walzen 32 sich wieder zurück in die ihnen zugeordneten V-förmigen Vertiefungen 34 bewegen. Ist hingegen der gemessene Wert zu niedrig, um die gewünschte Bremskraftanforderung zu erfüllen, veranlasst die Steuerung den elektrischen Aktuator 21 dazu, die Keilplatte 28 in die entgegengesetzte Richtung zu verschieben, um die Reibbeläge 38, 40 stärker an die Bremsscheibe 12 anzupressen.

Wie bereits erwähnt, ist in dem zylindrischen Raum 26 eine nicht dargestellte Nachstelleinrichtung untergebracht, die dazu dient, ein sich durch Verschleiß der Reibbeläge 38, 40 vergrößerndes Lüftspiel zwischen der Bremsscheibe 12 und den Reibbelägen 38, 40 auf einem vorgegebenen Wert zu halten, d.h. den Reibbelagverschleiß auszugleichen. Mit dem Begriff "Lüftspiel" ist hier der Abstand zwischen jedem Reibbelag 38, 40 und der zugeordneten Bremsscheibenoberfläche gemeint, der sich bei unbetätigter Scheibenbremse einstellt und der zu Beginn einer Bremsbetätigung überwunden werden muss, damit die Reibbeläge in Kontakt mit der Bremsscheibe 12 geraten.

Auf der von der Bremsscheibe 12 abgewandten Seite des Raumes 26 stützt sich die Betätigungseinheit 20 über die nicht dargestellte Nachstelleinrichtung in einer zur Achse x parallelen Richtung an einer Kontaktfläche 58 des Schwimmsattels 18 ab. Diese Kontaktfläche 58 ist in Abstützrichtung x zumindest im Wesentlichen form- und lagestabil ausgeführt, damit die bei einem Bremsvorgang erzeugte Zuspannkraft der Scheibenbremse 10 möglichst verlustfrei auf die Bremsscheibe 12 übertragen werden kann. Allerdings muss an dieser Stelle verhindert werden, dass während einer Bremsung Abstützkräfte von der Betätigungseinheit 20 in y-Richtung auf den Schwimmsattel 18 übertragen werden, da eine solche Abstützkraftübertragung vom Kraftsensor nicht erfasst werden würde und somit einen Messfehler hervorrufen würde. Die Kontaktfläche 58 ist deshalb quer zur Abstützrichtung der Zuspannkraft reibungsarm ausgebildet, beispielsweise durch eine PTFE-Beschichtung oder eine Bronze/Stahl-Materialpaarung der in y-Richtung aufeinander gleitenden Flächen. Alternativ kann an der Kontaktfläche 58 mittels einer geeigneten konstruktiven Ausbildung auch eine Rollreibung in y-Richtung erzielt werden, um den Messfehler des Kraftsensors möglichst klein zu halten. Damit sich der den Raum 26 umgebende hohlzylindrische Fortsatz der Betätigungseinheit 20 in y-Richtung relativ zur am Schwimmsattel 18 ausgebildeten Kontaktfläche 58 bewegen kann, ist zwischen dem hohlzylindrischen Fortsatz der Betätigungseinheit 20 und dem umgebenden Schwimmsattel 18 ein ausreichend großes Spiel vorhanden.

## Patentansprüche

1. Selbstverstärkende elektromechanische Schwimmsattel-Teilbelagscheibenbremse (10), mit
- einer um eine Achse (x) drehbaren Bremsscheibe (12),
- einem Bremsträger (14),
- einem die Bremsscheibe (12) übergreifenden Schwimmsattel (18), der mittels einer ersten Führung (16) am Bremsträger (14) befestigt und bezüglich desselben parallel zur Achse (x) verschieblich gelagert ist,
- einer Betätigungseinheit (20) mit
-- einem elektrischen Aktuator (21) zum Erzeugen einer Betätigungskraft,
-- einer Selbstverstärkungseinrichtung (22) zur Selbstverstärkung der vom elektrischen Aktuator (21) erzeugten Betätigungskraft, und
-- einer Nachstelleinrichtung zum Ausgleich von Reibbelagverschleiß,
- einem von der Betätigungseinheit (20) direkt betätigten Reibbelag (38), auf den die Betätigungseinheit (20) unmittelbar wirkt, um den direkt betätigten Reibbelag (38) an eine Seite der Bremsscheibe (12) anzupressen, und
- einem mittels des Schwimmsattels (18) indirekt betätigten Reibbelag (40) auf der entgegengesetzten Seite der Bremsscheibe (12), **dadurch gekennzeichnet, dass** die Betätigungseinheit (20) mittels einer zweiten Führung (42) am Bremsträger (14) befestigt und bezüglich desselben parallel zur Achse (x) verschieblich gelagert ist, und wobei die Betätigungseinheit (20) ferner mittels einer dritten Führung (48) am Schwimmsattel (18) befestigt und bezüglich desselben um eine zur Achse (x) parallele Achse verschiebbar und um diese Achse drehbar gelagert ist.

2. Scheibenbremse nach Anspruch 1,
**dadurch gekennzeichnet, dass** in Bezug auf die Achse (x) die zweite Führung (42) radial einwärts bezüglich der ersten Führung (16) angeordnet ist.

3. Scheibenbremse nach Anspruch 2,
**dadurch gekennzeichnet, dass** in Bezug auf die Achse (x) die zweite Führung (42) radial einwärts der Betätigungseinheit (20) angeordnet ist.

4. Scheibenbremse nach einem der Ansprüche 1 bis 3,
**dadurch gekennzeichnet, dass** die Selbstverstärkungseinrichtung zwischen dem direkt betätigten Reibbelag (38) und dem elektrischen Aktuator (21) angeordnet ist.

5. Scheibenbremse nach einem der vorhergehenden Ansprüche,
**dadurch gekennzeichnet, dass** die erste Führung (16) und/oder die zweite Führung (42) und/oder die dritte Führung (48) als Gleitbolzen ausgebildet ist/sind.

6. Scheibenbremse nach einem der vorhergehenden Ansprüche,
**dadurch gekennzeichnet, dass** zur Ermittlung der im Betrieb der Bremse wirkenden Reibkraft ein Sensor (56) die an der dritten Führung (48) zwischen der Betätigungseinheit (20) und dem Schwimmsattel (18) wirkende Abstützkraft misst.

7. Scheibenbremse nach einem der vorhergehenden Ansprüche,
**dadurch gekennzeichnet, dass** sich bei einem Bremsvorgang die Betätigungseinheit (20) auf ihrer von der Bremsscheibe (12) abgewandten Seite in einer zur Achse (x) parallelen Richtung an einer Kontaktfläche (58) zum Schwimmsattel (18) abstützt, wobei diese Kontaktfläche (58) in Abstützrichtung zumindest im Wesentlichen form- und lagestabil ist und quer zur Abstützrichtung reibungsarm ausgebildet ist.

8. Scheibenbremse nach Anspruch 7,
**dadurch gekennzeichnet, dass** die Kontaktfläche (58) eine Gleitpaarung umfasst.

9. Scheibenbremse nach Anspruch 7,
**dadurch gekennzeichnet, dass** an der Kontaktfläche (58) quer zur Abstützrichtung Rollreibung vorliegt.

## Claims

1. Self-energising electromechanical floating caliper partially lined disc brake (10), comprising
- a brake disc (12) which can be rotated about an axis (x),
- a brake support (14),
- a floating caliper (18) overlapping the brake disc (12), said floating caliper (18) being secured to the brake support (14) by means of a first guide (16) and mounted in a moveable manner parallel to the axis (x) relative to said brake support,
- an actuating unit (20) comprising
-- an electrical actuator (21) for generating an actuating force,
-- a self-energising device (22) for self-energising the actuating force generated by the electrical actuator (21), and
-- a regulating device to compensate for friction lining wear,
- a friction lining (38) directly actuated by the actuating unit (20), said actuating unit (20) directly acting on said friction lining so as to press the directly actuated friction lining (38) against one side of the brake disc (12), and
- a friction lining (40) indirectly actuated on the opposite side of the brake disc (12) by means of the floating caliper (18),
**characterised in that**
the actuating unit (20) is secured to the brake support (14) by means of a second guide (42) and mounted in a moveable manner parallel to the axis (x) relative to said brake support, the actuating unit (20) being further secured to the floating caliper (18) by means of a third guide (48) and being mounted relative to said floating caliper so that said unit can move about an axis which is parallel to the axis (x) and can be rotated about said axis.

2. Disc brake according to claim 1,
**characterised in that** in relation to the axis (x) the second guide (42) is arranged radially inwards relative to the first guide (16).

3. Disc brake according to claim 2,
**characterised in that** in relation to the axis (x) the second guide (42) is arranged radially inwards of the actuating unit (20).

4. Disc brake according to one of claims 1 to 3,
**characterised in that** the self-energising device is arranged between the directly actuated friction lining (38) and the electrical actuator (21).

5. Disc brake according to one of the preceding claims,
**characterised in that** the first guide (16) and/or the second guide (42) and/or the third guide (48) is/are embodied as sliding bolts.

6. Disc brake according to one of the preceding claims,
**characterised in that** a sensor (56) measures the support force acting on the third guide (48) between the actuating unit (20) and the floating caliper (18) in order to determine the friction force being applied when the brake is operating.

7. Disc brake according to one of the preceding claims,
**characterised in that** during braking the actuating unit (20) is supported on its side facing away from the brake disc (12) in a direction parallel to the axis (x) on a surface (58) in contact with the floating caliper (18), said contact surface (58) being at least essentially stable in terms of shape and position in the supporting direction, and being embodied to be low in friction in the direction transverse to the supporting direction.

8. Disc brake according to claim 7,
**characterised in that** the contact surface (58) comprises a tribological pairing.

9. Disc brake according to claim 7,
**characterised in that** rolling friction is present on the contact surface (58) in the direction transverse to the supporting direction.

## Revendications

1. Frein à disque électromécanique à autoserrage avec garniture partielle et étrier de frein flottant (10), comportant :
- un disque de frein (12), apte à tourner autour d'un axe (x),
- un support de frein (14),
- un étrier flottant (18), qui enserre par le haut le disque de frein (12) et qui est fixé au moyen d'un premier guidage (16) sur le support de frein (14) et est monté de manière mobile par rapport à celui-ci parallèlement à l'axe (x),
- une unité d'actionnement (20) comportant
-- un actionneur (21) électrique destiné à générer une force de freinage,
-- un dispositif d'autoserrage (22) destiné à amplifier automatiquement la force d'actionnement générée par l'actionneur (21) électrique, et
-- un dispositif de correction destiné à compenser l'usure des garnitures de frein,
- une garniture de frein (38), qui est actionnée directement par l'unité d'actionnement (20) et sur laquelle l'unité d'actionnement (20) agit directement pour pousser la garniture de frein (38) actionnée directement contre une face du disque de frein (12), et
- une garniture de frein (40) actionnée indirectement au moyen de l'étrier flottant (18), sur le côté opposé du disque de frein (12),
**caractérisé en ce que** l'unité d'actionnement (20) est fixée au moyen d'un deuxième guidage (42) sur le support de frein (14) et est montée mobile par rapport à celui-ci parallèlement à l'axe (x), et l'unité d'actionnement (20) étant fixée en outre au moyen d'un troisième guidage (48) sur l'étrier flottant (18) et étant montée de manière mobile par rapport à celui-ci autour d'un axe parallèle à l'axe (x) et de manière à pouvoir tourner autour de cet axe.

2. Frein à disque selon la revendication 1, **caractérisé en ce que**, par rapport à l'axe (x), le deuxième guidage (42) est agencé radialement vers l'intérieur par rapport au premier guidage (16).

3. Frein à disque selon la revendication 2, **caractérisé en ce que**, par rapport à l'axe (x), le deuxième guidage (42) est agencé radialement vers l'intérieur de l'unité d'actionnement (20).

4. Frein à disque selon l'une quelconque des revendications 1 à 3, **caractérisé en ce que** le dispositif d'autoserrage est agencé entre la garniture de frein (38) actionnée directement et l'actionneur (21) électrique.

5. Frein à disque selon l'une quelconque des revendications précédentes, **caractérisé en ce que** le premier guidage (16) et/ou le deuxième guidage (42) et/ou le troisième guidage (48) est ou sont réalisé(s) sous forme de tiges de guidage.

6. Frein à disque selon l'une quelconque des revendications précédentes, **caractérisé en ce que** pour déterminer la force de frottement exercée en cours de service du frein, un capteur (56) mesure la force d'appui exercée sur le troisième guidage (48) entre l'unité d'actionnement (20) et l'étrier flottant (18).

7. Frein à disque selon l'une quelconque des revendications précédentes, **caractérisé en ce que**, pendant un processus de freinage, l'unité d'actionnement (20) prend appui par son côté opposé au disque de frein (12) contre une face de contact (58) pour l'étrier flottant (18) dans une direction parallèle à l'axe (x), ladite face de contact (58) étant réalisée de manière au moins sensiblement stable en forme et en position dans le sens d'appui et sans frottement transversalement au sens d'appui.

8. Frein à disque selon la revendication 7, **caractérisé en ce que** la surface de contact (58) est réalisée par un appariement de matériaux antifriction.

9. Frein à disque selon la revendication 7, **caractérisé en ce qu'**un frottement par roulement est réalisé sur la surface de contact (58) transversalement au sens d'appui.
